# EUROPEAN PATENT APPLICATION

(11) **EP 3 010 303 A1**
(43) Date of publication of application: **20.04.2016**
(21) Application number: 14810768.3
(22) Date of filing: 07.03.2014
(51) Int. Cl.: H04W 76/02

(54) **DATA PACKET TRANSMISSION METHOD, ACCESS POINT, AND WIRELESS COMMUNICATION SYSTEM**

(30) Priority: 13.06.2013 CN 201310232730
(71) Applicant: Huawei Technologies Co., Ltd., Longgang District Shenzhen, Guangdong 518129 (CN)
(72) Inventor: WU, Tianyu, Shenzhen Guangdong 518129 (CN); LUO, Yi, Shenzhen Guangdong 518129 (CN); ZHANG, Lianbo, Shenzhen Guangdong 518129 (CN)
(74) Representative: Isarpatent
(86) International application number: PCT/CN2014/073028
(87) International publication number: WO 2014/198138

(57) **Abstract**

The present invention discloses a method for data packet transmission, an access point and a wireless communication system, which can reduce time delay of the data packet transmission. The method includes: acquiring, by an AP, service attribute information between the AP and a terminal station; establishing, by the AP, a dedicated channel between the AP and the terminal station according to the service attribute information, where the dedicated channel is dedicated to transmitting a data packet between the AP and the terminal station; transmitting, by the AP, a data packet to the terminal station via the dedicated channel. The data packet is transmitted between the AP and the terminal station directly via the dedicated channel. Compared with the prior art where a channel is reallocated each time a data packet is transmitted, embodiments of the present invention can save time for channel allocation.

## Description

This application claims priority to Chinese Patent Application No. 201310232730.X, filed with the Chinese Patent Office on June 13, 2013, titled "method for data packet transmission, access point and wireless communication system", which is hereby incorporated by reference in its entirety.

### TECHNICAL FIELD

The present invention relates to the communication field, and in particular, to a method for data packet transmission, an access point and a wireless communication system.

### BACKGROUND

With the development of communication technologies, many applications can be implemented by virtue of interacting data packets between an access point (whose full English name is Access Point, AP for short) and a terminal station. For example, in a cloud desktop application, the cloud responds to operating instructions and other instructions of a mouse and a keyboard in real time.

A method for data packet transmission between the AP and the terminal station is that, when a downlink data packet arrives, the AP allocates a channel to the terminal station, sends to the terminal station a scheduling frame for informing the channel which is used for transmitting data packets, and sends the downlink data packet on the channel; when an uplink data packet arrives, the terminal station sends to the AP an uplink request frame, the AP allocates a channel to the terminal station after receiving the uplink request frame, and sends to the terminal station a scheduling frame for informing the channel which is used for transmitting data packets. The terminal station sends the uplink data packet on the channel after receiving the scheduling frame.

However, in this method for data packet transmission, after one time of data packet transmission is accomplished between the AP and the terminal station, the channel used for transmitting data packets is no longer applied. When the AP and the terminal station transmit a data packet therebetween next time, the AP needs to reallocate a channel used for transmitting data packets to the terminal station. A channel is reallocated each time a data packet is transmitted, thus resulting in that the delay of transmitting a data packet is comparatively long.

### SUMMARY

Embodiments of the present invention provide a method for data packet transmission, an access point and a wireless communication system, which can reduce data packet transmission delay.

The embodiments of the present invention adopt following technical solutions:
A first aspect of the present invention provides a method for data packet transmission, including:
   acquiring, by an AP, service attribute information between the AP and a terminal station; establishing, by the AP, a dedicated channel between the AP and the terminal station according to the service attribute information, where the dedicated channel is dedicated to transmitting a data packet between the AP and the terminal station; and transmitting, by the AP, a data packet to the terminal station via the dedicated channel.

Combining the first aspect, in a first possible implementation of the first aspect, where the service attribute information includes service period information and a length of the data packet, where the establishing, by the AP, the dedicated channel between the AP and the terminal station according to the service attribute information includes:
determining, by the AP, a period of a target physical resource unit according to the service period information, where the target physical resource unit is a physical resource unit corresponding to the dedicated channel; determining, by the AP, a length of the target physical resource unit according to the length of the data packet; acquiring, by the AP, location information of the target physical resource unit; sending, by the AP, to the terminal station the location information of the target physical resource unit, the period of the target physical resource unit and the length of the target physical resource unit, triggering the terminal station to determine the target physical resource unit, and establishing the dedicated channel between the AP and the terminal station.

Combining the first aspect, in a second possible implementation of the first aspect, where the service attribute information includes service period information, where the establishing, by the AP, the dedicated channel between the AP and the terminal station according to the service attribute information includes:
determining, by the AP, a period of a target physical resource unit according to the service period information, where the target physical resource unit is a physical resource unit corresponding to the dedicated channel; determining, by the AP, a length of the target physical resource unit according to a preset length of the data packet; acquiring, by the AP, location information of the target physical resource unit; sending, by the AP, to the terminal station the location information of the target physical resource unit, the period of the target physical resource unit and the length of the target physical resource unit, triggering the terminal station to determine the target physical resource unit, and establishing the dedicated channel between the AP and the terminal station.

Combining the first aspect or any one of the possible implementations of the first aspect, in a third possible implementation of the first aspect, where the establishing, by the AP, the dedicated channel between the AP and the terminal station according to the service attribute information includes:
establishing the dedicated channel between the AP and the terminal station, after the AP acquires the service attribute information; or, establishing the dedicated channel between the AP and the terminal station, after the AP acquires the service attribute information and receiving a request for establishing the dedicated channel sent by the terminal station; or, establishing the dedicated channel between the AP and the terminal station, after the AP acquires the service attribute information and a number of data packets transmitted within a preset time between the AP and the terminal station exceeds a preset threshold.

Combining the first aspect or any one of the possible implementations of the first aspect, in a fourth possible implementation of the first aspect, where the acquiring, by the AP, the service attribute information between the AP and the terminal station includes:
determining, by the AP, the service attribute information according to data packet transmission state information between the AP and the terminal station; or, receiving, by the AP, the service attribute information sent by the terminal station, where the service attribute information is determined by the terminal station according to data packet transmission state information between the AP and the terminal station.

Combining the first aspect or any one of the possible implementations of the first aspect, in a fifth possible implementation of the first aspect, where after the establishing, by the AP, the dedicated channel between the AP and the terminal station according to the service attribute information, further including:
revoking, by the AP, the dedicated channel between the AP and the terminal station, when the data packet transmission between the AP and the terminal station is terminated.

Combining the first aspect or any one of the possible implementations of the first aspect, in a sixth possible implementation of the first aspect, where after the transmitting, by the AP, the data packet to the terminal station via the dedicated channel, further including:
updating, by the AP, the dedicated channel according to data packet transmission state information between the AP and the terminal station, and notifying the terminal station of performing the communication via the updated dedicated channel; and transmitting, by the AP, a data packet to the terminal station via the updated dedicated channel.

Combining the first or the second possible implementation of the first aspect, in a seventh possible implementation of the first aspect, where the service period information includes at least one of the followings:
a transmission period of the data packet, a maximal time delay value of the data packet and an average arriving rate of the data packet.

Combining the first or the second possible implementation of the first aspect, in a eighth possible implementation of the first aspect, where the physical resource unit is a part of a physical resource block, or the physical resource unit includes at least one physical resource block.

A second aspect of the present invention provides an access point, including:
an acquiring unit, configured to acquire service attribute information between the AP and a terminal station; an establishing unit, configured to establish a dedicated channel between the AP and the terminal station according to the service attribute information, where the dedicated channel is dedicated to transmitting a data packet between the AP and the terminal station; and a first transmitting unit, configured to transmit a data packet to the terminal station via the dedicated channel.

Combining the second aspect, in a first possible implementation of the second aspect, where the establishing unit includes:
a first sub-unit, configured to determine a period of a target physical resource unit according to the service period information, where the target physical resource unit is a physical resource unit corresponding to the dedicated channel; a second sub-unit, configured to determine a length of the target physical resource unit according to the length of the data packet; a third sub-unit, configured to acquire location information of the target physical resource unit; and a fourth sub-unit, configured to send to the terminal station the location information of the target physical resource unit, the period of the target physical resource unit and the length of the target physical resource unit, trigger the terminal station to determine the target physical resource unit, and establish the dedicated channel between the AP and the terminal station.

Combining the second aspect, in a second possible implementation of the second aspect, where the establishing unit includes:
a fifth sub-unit, configured to determine a period of a target physical resource unit according to the service period information, where the target physical resource unit is a physical resource unit corresponding to the dedicated channel; a sixth sub-unit, configured to determine a length of the target physical resource unit according to a preset length of the data packet; a seventh sub-unit, configured to acquire location information of the target physical resource unit; and an eighth sub-unit, configured to send to the terminal station the location information of the target physical resource unit, the period of the target physical resource unit and the length of the target physical resource unit, trigger the terminal station to determine the target physical resource unit, and establish the dedicated channel between the AP and the terminal station.

Combining the second aspect or any one of the possible implementations of the second aspect, in a third possible implementation of the second aspect, further including:
a revoking unit, configured to revoke the dedicated channel between the AP and the terminal station, when data packet transmission between the AP and the terminal station is terminated.

Combining the second aspect or any one of the possible implementations of the second aspect, in a fourth possible implementation of the second aspect, where the establishing unit is specifically configured to establish the dedicated channel between the AP and the terminal station, after acquiring the service attribute information; or, the establishing unit is specifically configured to establish the dedicated channel between the AP and the terminal station, after acquiring the service attribute information and receiving a request for establishing the dedicated channel sent by the terminal station; or, the establishing unit is specifically configured to establish the dedicated channel between the AP and the terminal station, after acquiring the service attribute information and a number of data packets transmitted within a preset time between the AP and the terminal station exceeds a preset threshold.

Combining the second aspect or any one of the possible implementations of the second aspect, in a fifth possible implementation of the second aspect, where the acquiring unit includes any one of the following sub-units:
a first sub-unit, configured to determine the service attribute information according to data packet transmission state information between the AP and the terminal station; a second sub-unit, configured to receive the service attribute information sent by the terminal station, where the service attribute information is determined by the terminal station according to the data packet transmission state information between the AP and the terminal station.

Combining the second aspect or any one of the possible implementations of the second aspect, in a sixth possible implementation of the second aspect, further including:
an updating unit, configured to update the dedicated channel according to data packet transmission state information between the AP and the terminal station, and notify the terminal station of performing communication via the updated dedicated channel; a second transmitting unit, transmit a data packet to the terminal station via the updated dedicated channel.

A third aspect of the present invention provides a wireless communication system, including an access point and at least one terminal station, where:
the access point is configured to acquire service attribute information between the AP and the terminal station; establish a dedicated channel between the AP and the terminal station according to the service attribute information, where the dedicated channel is dedicated to transmitting a data packet between the AP and the terminal station; transmit a data packet to the terminal station via the dedicated channel;
the terminal station is configured to transmit a data packet to the terminal station via the dedicated channel;
the access point includes the access point according to the aforementioned second aspect or any one of the possible implementations of the second aspect.

Based on the aforementioned technical solutions, according to the method for data packet transmission, the access point and the wireless communication system of the embodiments of the present invention, the AP acquires the service attribute information between the AP and the terminal station, the AP establishes the dedicated channel dedicated to transmitting the data packet between the AP and the terminal station according to the service attribute information, the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

### BRIEF DESCRIPTION OF DRAWINGS

To describe the technical solutions in embodiments of the present invention more clearly, the following briefly introduces the accompanying drawings needed for describing the embodiments. Apparently, the accompanying drawings in the following description illustrate merely some embodiments of the present invention, and persons of ordinary skill in the art may still derive other drawings from these accompanying drawings without creative effort.
FIG. 1 is a flowchart of a method for data packet transmission according to an embodiment of the present invention;
FIG. 2 is a flowchart of establishing a dedicated channel according to an embodiment of the present invention;
FIG. 3 is a flowchart of establishing a dedicated channel according to an embodiment of the present invention;
FIG. 4a is a schematic view of a physical resource block partition according to an embodiment of the present invention;
FIG. 4b is a schematic view of a physical resource block partition according to another embodiment of the present invention;
FIG. 5 is a flowchart of a method for data packet transmission according to an embodiment of the present invention;
FIG. 6 is a flowchart of a method for data packet transmission according to an embodiment of the present invention;
FIG. 7 is a flowchart of a method for data packet transmission according to an embodiment of the present invention;
FIG. 8 is a flowchart of a method for data packet transmission according to an embodiment of the present invention;
FIG. 9 is a flowchart of updating a dedicated channel according to an embodiment of the present invention;
FIG. 10 is a schematic structural diagram of an access point according to an embodiment of the present invention;
FIG. 11 is a schematic structural diagram of an access point according to an embodiment of the present invention;
FIG. 12 is a schematic structural diagram of an access point according to an embodiment of the present invention;
FIG. 13 is a schematic structural diagram of an access point according to an embodiment of the present invention;
FIG. 14 is a schematic structural diagram of an access point according to an embodiment of the present invention;
FIG. 15 is a schematic structural diagram of an access point according to an embodiment of the present invention; and
FIG. 16 is a schematic structural diagram of a wireless communication system according to an embodiment of the present invention.

### DESCRIPTION OF EMBODIMENTS

In order to make objectives, technical solutions, and advantages of embodiments of the present invention clearer, the technical solutions in embodiments of the present invention will be described clearly hereinafter with reference to the accompanying drawings in embodiments of the present invention. Obviously, the described embodiments are only a part of embodiments of the present invention, rather than all embodiments thereof. All other embodiments obtained by persons of ordinary skill in the art based on embodiments of the present invention without any creative effort shall fall into the protection scope of the present invention.

An AP in the embodiments of the present invention can be a wireless local network access point, and a terminal station is a device which can wirelessly communicate with the AP. For example, the terminal station can be a cell phone, a laptop, a tablet personal computer, etc. Embodiments of the present invention can be applied to many WLAN systems introduced with centralized scheduling, such as, but not limited to, a wireless enterprise network, a family wireless network or etc. A "data packet" in the embodiments of the present invention is usually a small data packet, namely, a length of the data packet is usually less than a length of a physical resource block.

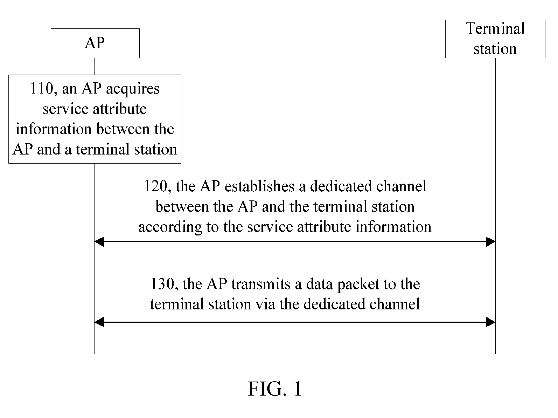

An embodiment of the present invention provides a method for data packet transmission, as shown in FIG. 1, the method may include:
110, an AP acquires service attribute information between the AP and a terminal station.

In the embodiment of the present invention, the AP communicates with the terminal station. For example, the AP may be a wireless local network access point, and the terminal station can be a cell phone, a computer, etc.

120, the AP establishes a dedicated channel between the AP and the terminal station according to the service attribute information, where the dedicated channel is dedicated to transmitting a data packet between the AP and the terminal station.

130, the AP transmits a data packet to the terminal station via the dedicated channel.

After establishing the dedicated channel, the AP directly sends to the terminal station a data packet on the dedicated channel, and the terminal station detects the dedicated channel regularly, and receives the data packet sent by the AP. The terminal station directly sends to the AP a data packet on the dedicated channel.

The data packet in the embodiment of the present invention is usually a small data packet, namely, a length of the data packet is usually less than a length of a single physical resource block.

According to the method for transmitting data packet in the aforementioned embodiment, the AP acquires the service attribute information between the AP and the terminal station, the AP establishes the dedicated channel dedicated to transmitting a data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

Optionally, when the AP acquires the service attribute information between the AP and the terminal station in the aforementioned 110, the AP may determine the service attribute information according to data packet transmission state information between the AP and the terminal station.

Or, when the AP acquires the service attribute information between the AP and the terminal station in the aforementioned 110, the AP may also receive the service attribute information sent by the terminal station, where the service attribute information is determined by the terminal station according to the data packet transmission state information between the AP and the terminal station.

According to different application scenarios, the data packet transmission state information may include any one or more of a maximal time delay value of the data packet, a service type, an average arriving rate of the data packet, an average packet length of the data packet and a maximal packet length of the data packet. According to different application scenarios, the service attribute information may include service period information, or the service attribute information may include service period information and a length of the data packet. The length of the data packet may be determined by the AP or the terminal station according to the average packet length of the data packet or the maximal packet length of the data packet included in the aforementioned data packet transmission state information.

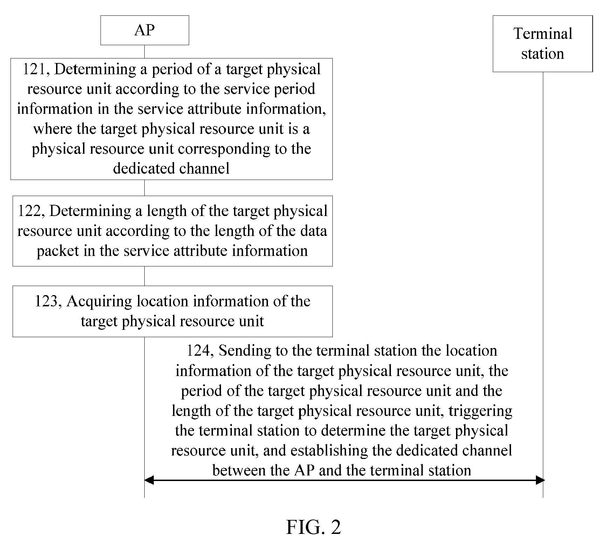

Optionally, when the service attribute information includes the service period information and the length of the data packet according to an embodiment of the present invention, the AP establishes the dedicated channel between the AP and the terminal station according to the service attribute information in the aforementioned 120 can be implemented according to steps shown in FIG. 2, which includes:
121, the AP determines a period of a target physical resource unit according to the service period information in the service attribute information, where the target physical resource unit is a physical resource unit corresponding to the dedicated channel.

In the embodiment of the present invention, the period of the target physical resource unit can be determined via several kinds of methods. For example, the AP can set the period of the target physical resource unit to be the same as a transmission period of the data packet; or, the AP can set the period of the target physical resource unit to be the same as a maximal time delay value of the data packet; or, the AP can obtain the transmission period of the data packet according to an average arriving rate of the data packet, and set the period of the target physical resource unit to be the same as the obtained transmission period of the data packet.

122, the AP determines a length of the target physical resource unit according to the length of the data packet in the service attribute information.

For example, the AP can set the length of the target physical resource unit to be the same as the length of the data packet.

123, the AP acquires location information of the target physical resource unit.

For example, the location information of the target physical resource unit can record a location of the physical resource block in which the target physical resource unit locates.

124, the AP sends to the terminal station the location information of the target physical resource unit, the period of the target physical resource unit and the length of the target physical resource unit, triggers the terminal station to determine the target physical resource unit, and establishes the dedicated channel between the AP and the terminal station.

Specifically, the terminal station determines the location of the target physical resource unit, the period of the target physical resource unit and the length of the target physical resource unit according to the location information of the target physical resource unit, the period of the target physical resource unit and the length of the target physical resource unit, so as to determine the dedicated channel allocated by the AP.

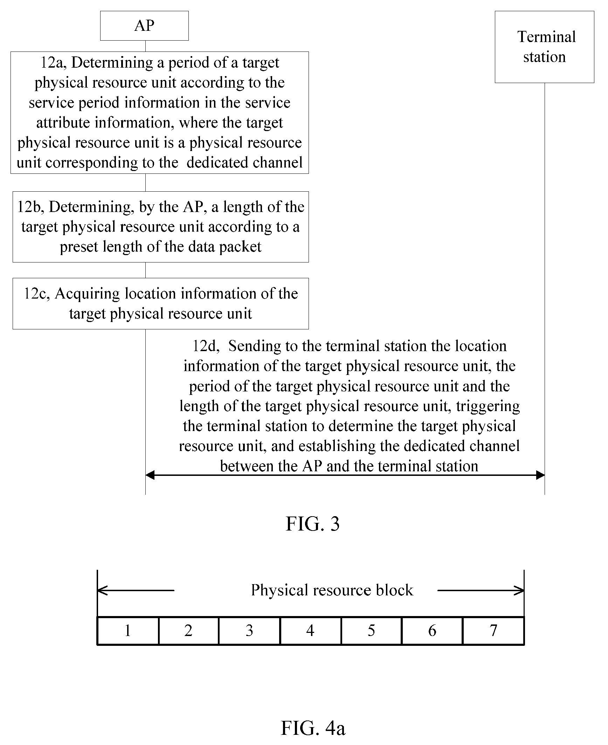

Optionally, when the service attribute information includes the service period information according to an embodiment of the present invention, the AP establishes the dedicated channel between the AP and the terminal station according to the service attribute information in the aforementioned 120 can be implemented according to steps shown in FIG. 3, which includes:
12a, the AP determines a period of a target physical resource unit according to the service period information in the service attribute information, where the target physical resource unit is a physical resource unit corresponding to a dedicated channel for transmitting state information.

Optionally, the service period information includes at least one of the followings: a transmission period of the data packet, a maximal time delay value of the data packet and an average arriving rate of the data packet. Correspondingly, the period of the target physical resource unit can be determined via several kinds of methods. For example, the AP can set the period of the target physical resource unit to be the same as a transmission period of the data packet; or, the AP can set the period of the target physical resource unit to be the same as a maximal time delay value of the data packet; or, the AP can obtain the transmission period of the data packet according to an average arriving rate of the data packet, and set the period of the target physical resource unit to be the same as the obtained transmission period of the data packet.

12b, the AP determines a length of the target physical resource unit according to a preset length of the data packet.

In the embodiment of the present invention, the preset length of the data packet can be changed according to different application scenarios.

12c, the AP acquires location information of the target physical resource unit.

For example, the location information of the target physical resource unit can record a location of the physical resource block in which the target physical resource unit locates.

12d, the AP sends to the terminal station the location information of the target physical resource unit, the period of the target physical resource unit and the length of the target physical resource unit, triggers the terminal station to determine the target physical resource unit, and establishes the dedicated channel between the AP and the terminal station.

Specifically, the terminal station determines the location of the target physical resource unit, the period of the target physical resource unit and the length of the target physical resource unit according to the location information of the target physical resource unit, the period of the target physical resource unit and the length of the target physical resource unit, so as to determine the dedicated channel allocated by the AP.

In the embodiment of the present invention, the aforementioned target physical resource unit can be a part of a physical resource block, or the target physical resource unit can also include at least one physical resource block.

When the target physical resource unit is a part of the physical resource block, the AP can allocate other parts of the physical resource block to other terminal stations. FIG. 4a is one example of a physical resource block partition according to an embodiment of the present invention. As shown in FIG. 4a, the AP can divide a physical resource block into a plurality of physical resource units (In FIG. 4a, the physical resource block is divided into seven physical resource units), and each resource unit is allocated to one terminal station. Where the length of each physical resource unit can be determined according to an average packet length of the data packet or a maximal packet length of the data packet. For example, the length of the physical resource unit which the data packet needs to occupy can be computed according to a main modulation and coding scheme (whose full English name is Modulation and coding scheme, MCS for short) from the AP to the terminal station and the average packet length of the data packet within a specific time, or the physical resource units can be divided according to a preset length. In this way, a plurality of terminal stations may share one physical resource block, thereby resources are saved.

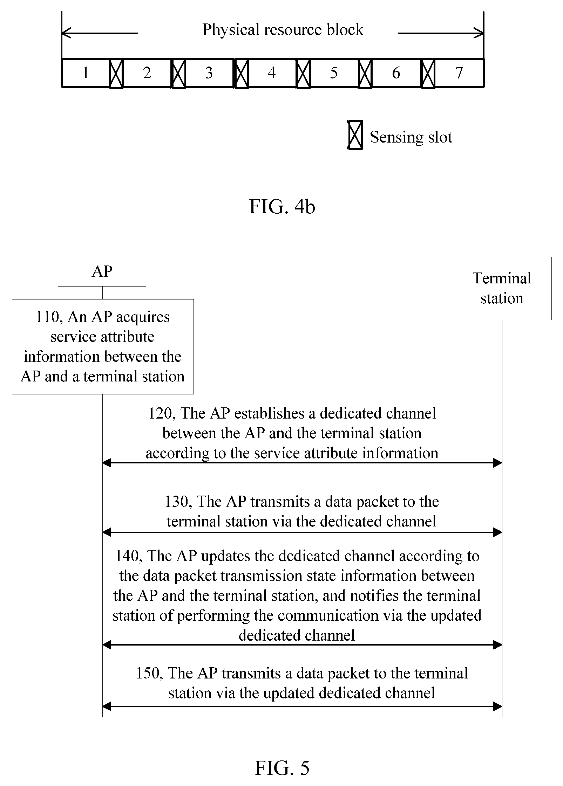

Besides, as shown in FIG. 4b, in the embodiment of the present invention, when the AP divides the physical resource block into a plurality of physical resource units, the AP can reserve a sensing slot between adjacent physical resource units, so that it is convenient for different terminal stations to detect corresponding physical resource units, thus avoiding mutual interference among physical resource units.

It should be understood that the methods for dividing the physical resource block shown in FIG. 4a and FIG. 4b are merely for illustration. According to different application scenarios, other methods may be applied to divide the physical resource block, and the specific manner for dividing the physical resource block is not limited in the embodiments of the present invention.

Optionally, according to the service type between the AP and the terminal station, the target physical resource unit may be periodical or aperiodical. When the target physical resource unit is periodical, the period of the target physical resource unit can be determined by the service period between the AP and the terminal station, or be determined by the maximal time delay value of the data packet between the AP and the terminal station.

Optionally, when the AP establishes the dedicated channel between the AP and the terminal station according to the service attribute information in the aforementioned 120, the AP can establish the dedicated channel between the AP and the terminal station after acquiring the service attribute information.

Or, when the AP establishes the dedicated channel between the AP and the terminal station according to the service attribute information in the aforementioned 120, the AP can establish the dedicated channel between the AP and the terminal station after acquiring the service attribute information and receiving a request for establishing the dedicated channel sent by the terminal station.

Optionally, when the terminal station sends the request for establishing the dedicated channel, the terminal station can send the dedicated channel request to the AP separately, the terminal station can also send the dedicated channel request to the AP by carrying the dedicated channel request in the service attribute information, and the terminal station can also send the dedicated channel request to the AP by carrying the dedicated channel request in other messages. The specific manner for sending the dedicated channel request is not limited in the embodiment of the present invention.

Or, when the AP establishes the dedicated channel between the AP and the terminal station according to the service attribute information in the aforementioned 120, the AP can establish the dedicated channel between the AP and the terminal station after acquiring the service attribute information and a number of data packets transmitted within a preset time between the AP and the terminal station exceeds a preset threshold.

The aforementioned preset time and the aforementioned preset threshold may be changed according to different application scenarios.

Optionally, when the AP transmits the data packet to the terminal station via the dedicated channel in the aforementioned 130, since the dedicated channel is dedicated to communication between the AP and the terminal station, the AP can simplify the header of the data packet when sending the data packet, thus resources are saved.

Optionally, after the AP establishes the dedicated channel between the AP and the terminal station according to the service attribute information, it is further included that: the AP revokes the dedicated channel between the AP and the terminal station, when the data packet transmission between the AP and the terminal station is terminated. For example, when idle time of the dedicated channel arrives at a preset threshold, the AP revokes the dedicated channel between the AP and the terminal station.

Optionally, as shown in FIG. 5, after the AP transmits the data packet to the terminal station via the dedicated channel in the aforementioned 130, it is further included that:
140, the AP updates the dedicated channel according to the data packet transmission state information between the AP and the terminal station, and notifies the terminal station of performing the communication via the updated dedicated channel.

Where the updating notification may include the location and the period of the physical resource unit corresponding to the updated dedicated channel, or include an allocation situation of the physical resource unit within a specific time.

150, the AP transmits a data packet to the terminal station via the updated dedicated channel.

In this way, the AP can update the dedicated channel according to data packet transmission state information between the AP and the terminal station in real time, so that the updated dedicated channel more conforms to the current data packet transmission state information, thereby increasing data packet transmission performance.

According to the method for transmitting data in the aforementioned embodiment, by acquiring the service attribute information between the AP and the terminal station, the AP establishes the dedicated channel dedicated to transmitting a data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

In the following, the specific implementation of the embodiments of the present invention are described in detail with reference to the examples, and it should be understood that the specific examples are merely used to describe the specific implementation of the present invention in detail, but are not intended to limit the embodiments of the present invention.

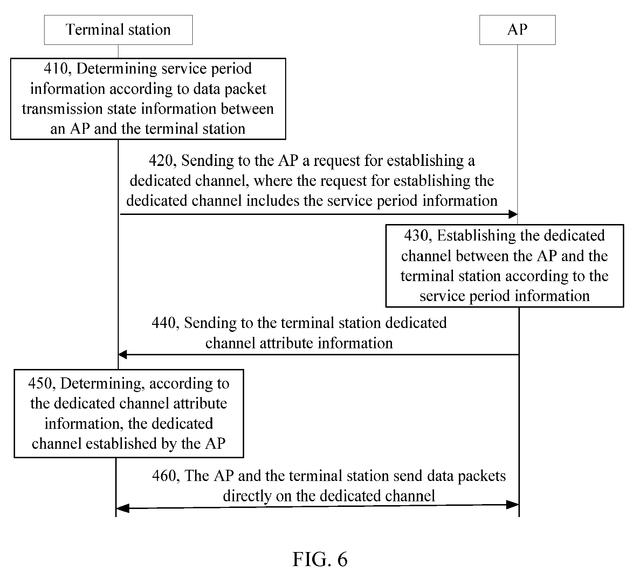

Please refer to FIG. 6, a method for data packet transmission according to an embodiment of the present invention may include:
410, a terminal station determines service period information according to data packet transmission state information between an AP and the terminal station.

Specifically, the terminal station detects data packets between the AP and a terminal station to obtain the data packet transmission state information. Optionally, the data packet transmission state information may include any one or more of a maximal time delay value of the data packet, a service type, an average arriving rate of the data packet, an average packet length of the data packet and a maximal packet length of the data packet.

Optionally, the service period information may include at least one of a transmission period of the data packet, the maximal time delay value of the data packet and the average arriving rate of the data packet.

Correspondingly, the terminal station determining the service period information according to the data packet transmission state information between the AP and the terminal station may be implemented by virtue of several kinds of methods.

For example, the terminal station may determine the transmission period of the data packet according to the service type included in the data packet transmission state information, for example, when the service type is VoIP, the transmission period of the data packet is 20 milliseconds.

For example, the AP or the terminal station may determine the maximal time delay value of the data packet according to the service type included in the data packet transmission state information. For example, when it is a video call service, the maximal time delay value of the data packet is 20 ms.

For example, the AP or the terminal station may take the average arriving rate of the data packet included in the data packet transmission state information as the average arriving rate of the data packet in the service period information.

420, the terminal station sends to the AP a request for establishing a dedicated channel, where the request for establishing the dedicated channel includes the service period information.

For example, the terminal station detects the transmission frequency of the data packet between the AP and the terminal station, and when the transmission frequency of the data packet is greater than a preset frequency, sends the request for establishing the dedicated channel.

In other embodiments of the present invention, the terminal station may send the request for establishing the dedicated channel to the AP independently or by carrying the request for establishing the dedicated channel in other data frames.

430, the AP establishes the dedicated channel between the AP and the terminal station according to the service period information, after receiving the request frame for establishing the dedicated channel sent by the terminal station.

The specific implementation manner can be found in the embodiment corresponding to FIG. 3 and is not repeated herein.

404, the AP sends to the terminal station dedicated channel attribute information.

Where the dedicated channel attribute information includes location information, a period or a length of a physical resource unit corresponding to the dedicated channel, or is an allocation situation of the physical resource unit within a specific time.

450, the terminal station receives the dedicated channel attribute information sent by the AP, and determines, according to the dedicated channel attribute information, the dedicated channel established by the AP.

460, the AP and the terminal station transmit data packets directly on the dedicated channel.

In other embodiments of the present invention, the terminal station may send to the AP the service period information and a length of the data packet in the aforementioned 420, correspondingly, the dedicated channel between the AP and the terminal station may be established according to the service period information and the length of the data packet in the aforementioned 430. The specific implementation process can be referred to the embodiment corresponding to FIG. 2 and is not repeated herein.

The data packet in the embodiment of the present invention is usually a small data packet, namely, a length of the data packet is usually less than a length of a single physical resource block.

According to the method for transmitting data packet in the aforementioned embodiment, the AP acquires the service period information between the AP and the terminal station, the AP establishes the dedicated channel dedicated to transmitting the data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

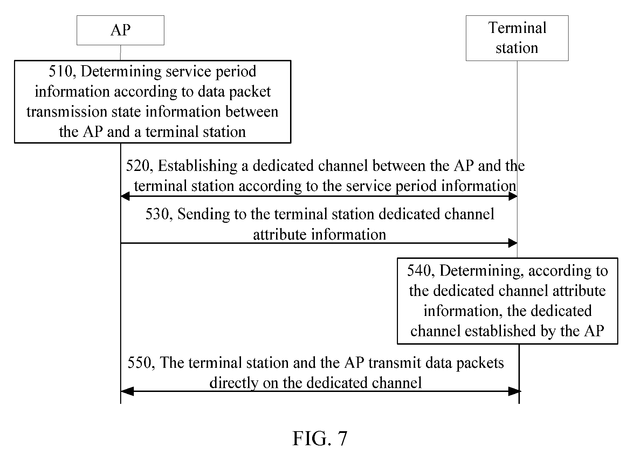

Please refer to FIG. 7, a method for data packet transmission according to an embodiment of the present invention may include:
510, an AP determines service period information according to data packet transmission state information between the AP and a terminal station.

Specifically, please refer to the aforementioned 410, which is not repeated here.

520, the AP establishes a dedicated channel between the AP and the terminal station according to the service period information.

530, the AP sends to the terminal station dedicated channel attribute information.

Where the dedicated channel attribute information includes a location and a period of a physical resource unit corresponding to the dedicated channel, or is an allocation situation of the physical resource unit within a specific time.

540, the terminal station receives the dedicated channel attribute information sent by the AP, and determines, according to the dedicated channel attribute information, the dedicated channel established by the AP.

550, the terminal station and the AP transmit data packets directly on the dedicated channel.

In other embodiments of the present invention, the AP may determine service period information and a length of the data packet according to the data packet transmission state information between the AP and a terminal station in the aforementioned 510, correspondingly, the dedicated channel between the AP and the terminal station may be established according to the service period information and the length of the data packet in the aforementioned 520. The specific implementation process can be referred to the embodiment corresponding to FIG. 2 and is not repeated herein.

Specifically, the AP detects a size of the data packet between the AP and the terminal station, and determines the length of the data packet. For example, the length of the data packet may be a length of a maximal data packet transmitted between the AP and the terminal station, or, the length of the data packet may be the average length of the data packets transmitted between the AP and the terminal station.

The data packet in the embodiment of the present invention is usually a small data packet, namely, a length of the data packet is usually less than a length of a single physical resource block.

According to the method for transmitting data packet in the aforementioned embodiment, the AP establishes the dedicated channel dedicated to transmitting the data packet between the AP and the terminal station according to the service period information between the AP and the terminal station, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

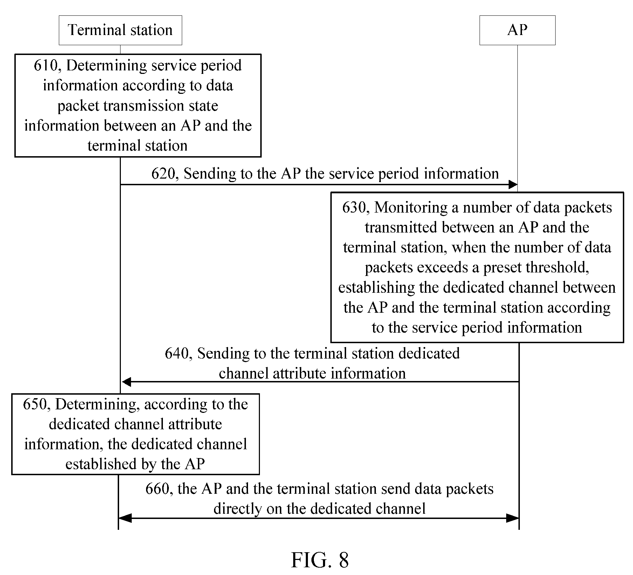

Please refer to FIG. 8, a method for data packet transmission according to an embodiment of the present invention may include:
610, a terminal station determines service period information according to data packet transmission state information between an AP and the terminal station.

Specifically, please refer to the aforementioned 410, which is not repeated here.

620, the terminal station sends to the AP the service period information.

In other embodiments of the present invention, the service period information can be determined by the AP according to the data packet transmission state information between an AP and the terminal station.

630, the AP monitors a number of data packets transmitted between an AP and the terminal station, and when the number of data packets exceeds a preset threshold, establishes a dedicated channel between the AP and the terminal station according to the service period information.

For example, the AP may count an arriving time of data packets which are less than a preset byte (such as 64 bytes) in a preset time, and if the arriving time is greater than the preset threshold, the AP establishes the dedicated channel. Or, for example, the AP monitors a time interval of arrival of a plurality of continuous data packets, and if the time interval is greater than the preset threshold, the AP establishes the dedicated channel.

Where the period or the maximal time interval of the physical resource unit corresponding to the dedicated channel may be determined according to the service period information.

640, the AP sends to the terminal station dedicated channel attribute information.

Where the dedicated channel attribute information includes a location and a period of a physical resource unit corresponding to the dedicated channel, or is an allocation situation of the physical resource unit within a specific time.

650, the terminal station receives the dedicated channel attribute information sent by the AP, and determines, according to the dedicated channel attribute information, the dedicated channel established by the AP.

660, the AP and the terminal station send data packets directly on the dedicated channel.

In other embodiments of the present invention, the terminal station may send to the AP the service period information and a length of the data packet in the aforementioned 610. Correspondingly, the AP may establish the dedicated channel between the AP and the terminal station according to the service period information and the length of the data packet in the aforementioned 630. The specific implementation process can be referred to the embodiment corresponding to FIG. 2 and is not repeated herein.

Optionally, the terminal station detects a size of the data packet between the AP and the terminal station, and determines the length of the data packet. For example, the length of the data packet may be a length of a maximal data packet transmitted between the AP and the terminal station, or, for example, the length of the data packet may be the average length of the data packets transmitted between the AP and the terminal station.

The data packet in the embodiment of the present invention is usually a small data packet, namely, a length of the data packet is usually less than a length of a single physical resource block.

According to the method for transmitting data packet in the aforementioned embodiment, the AP acquires the service period information between the AP and the terminal station, the AP establishes the dedicated channel dedicated to transmitting the data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

In the embodiment of the present invention, after the dedicated channel is established in the aforementioned 460, 550 and 660, the period or the maximal time interval of the physical resource unit corresponding to the dedicated channel may be dynamically adjusted.

Specifically, after the AP establishes the dedicated channel, the AP or the terminal station may continuously monitor the data packet transmission state information between the AP and the terminal station to re-determine the service attribute information, and the AP may update the dedicated channel according to the re-determined the service attribute information.

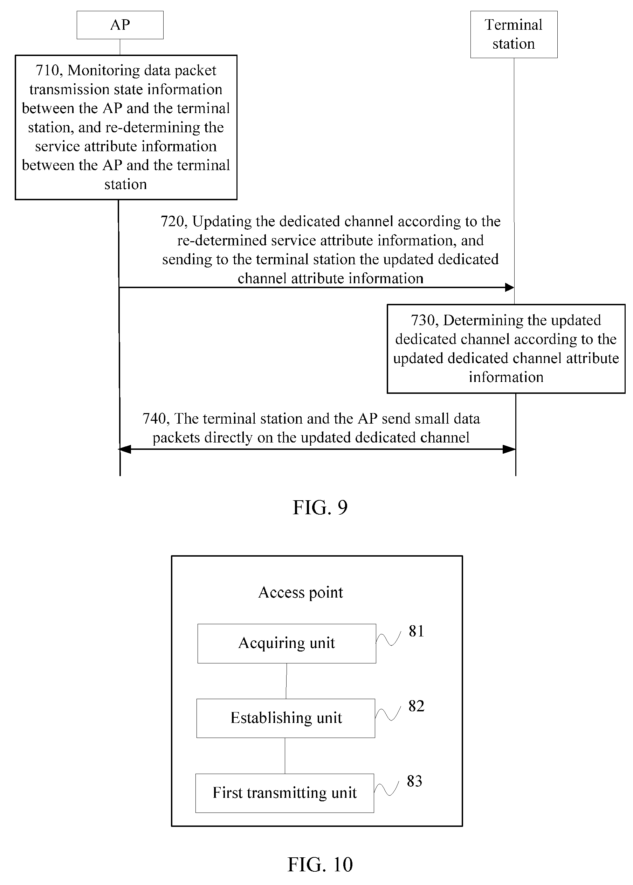

As shown in FIG. 9, in the embodiment of the present invention, the step of changing the dedicated channel may include:
710, the AP monitors data packet transmission state information between the AP and the terminal station, and re-determines the service attribute information between the AP and the terminal station.

In other embodiments of the present invention, the terminal device may monitor the data packet transmission state information between the AP and the terminal station and re-determines the service attribute information between the AP and the terminal station, and the terminal device sends to the AP the re-determined service attribute information.

720, the AP updates the dedicated channel according to the re-determined service attribute information, and sends to the terminal station the updated dedicated channel attribute information.

Optionally, the updated dedicated channel attribute information includes a location and a period of a physical resource unit corresponding to the updated dedicated channel, or, is an allocation situation of the physical resource unit within a specific time.

730, the terminal station receives the updated dedicated channel attribute information sent by the AP, and determines the updated dedicated channel according to the updated dedicated channel attribute information.

740, the terminal station and the AP send small data packets directly on the updated dedicated channel.

In this way, parameters of the dedicated channel may be adjusted in real time according to a current transmission situation of data packets, thereby increasing a matching degree between the dedicated channel and current data packet transmission state information.

As shown in FIG. 10, an access point according to an embodiment of the present invention may include: an acquiring unit 81, an establishing unit 82 and a first transmitting unit 83, where:
the acquiring unit 81, configured to acquire service attribute information between the AP and a terminal station;
the establishing unit 82, configured to establish a dedicated channel between the AP and the terminal station according to the service attribute information, where the dedicated channel is dedicated to transmitting a data packet between the AP and the terminal station; and
the first transmitting unit 83, configured to transmit a data packet to the terminal station via the dedicated channel.

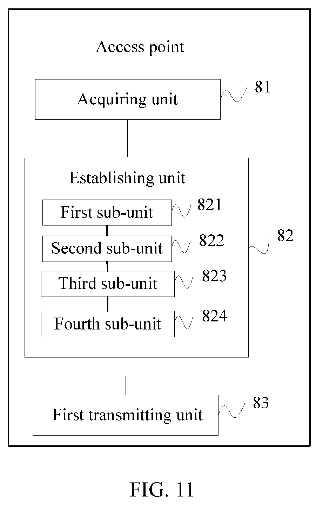

Optionally, as shown in FIG. 11, the establishing unit 12 includes:
a first sub-unit 821, configured to determine a period of a target physical resource unit according to the service period information, where the target physical resource unit is a physical resource unit corresponding to the dedicated channel;
a second sub-unit 822, configured to determine a length of the target physical resource unit according to a length of the data packet;
a third sub-unit 823, configured to acquire location information of the target physical resource unit;
a fourth sub-unit 824, configured to send to the terminal station the location information of the target physical resource unit, the period of the target physical resource unit and the length of the target physical resource unit, trigger the terminal station to determine the target physical resource unit and establish the dedicated channel between the AP and the terminal station.

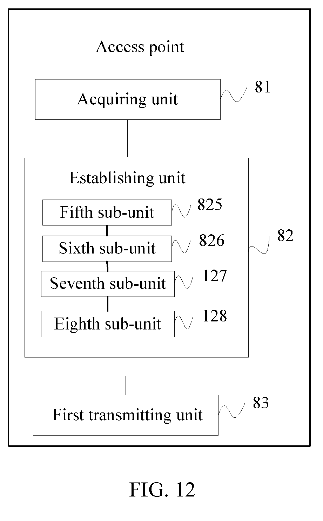

Optionally, as shown in FIG. 12, the establishing unit 12 includes:
a fifth sub-unit 825, configured to determine a period of a target physical resource unit according to the service period information, where the target physical resource unit is a physical resource unit corresponding to the dedicated channel;
a sixth sub-unit 826, configured to determine a length of the target physical resource unit according to a preset length of the data packet;
a seventh sub-unit 127, configured to acquire location information of the target physical resource unit by the AP;
an eighth sub-unit 128, configured to send to the terminal station the location information of the target physical resource unit, the period of the target physical resource unit and the length of the target physical resource unit, trigger the terminal station to determine the target physical resource unit and establish the dedicated channel between the AP and the terminal station.

Optionally, the establishing unit 12 is specifically configured to establish the dedicated channel between the AP and the terminal station, after acquiring the service attribute information;
or, the establishing unit 12 is specifically configured to establish the dedicated channel between the AP and the terminal station, after acquiring the service attribute information and receiving a request for establishing the dedicated channel sent by the terminal station;
or, the establishing unit 12 is specifically configured to establish the dedicated channel between the AP and the terminal station, after acquiring the service attribute information and a number of data packets transmitted within a preset time between the AP and the terminal station exceeds a preset threshold.

The aforementioned preset time and the aforementioned preset threshold may be changed according to different application scenarios.

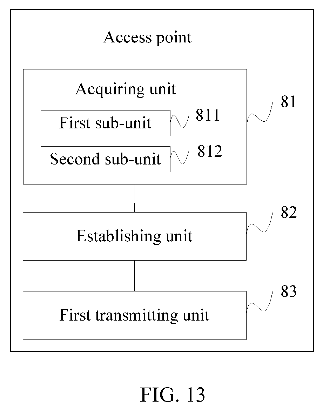

Optionally, as shown in FIG. 13, the acquiring unit 81 may include any one of the following sub-units:
a first sub-unit 811, configured to determine the service attribute information according to data packet transmission state information between the AP and the terminal station;
a second sub-unit 812, configured to receive the service attribute information sent by the terminal station, where the service attribute information is determined by the terminal station according to the data packet transmission state information between the AP and the terminal station.

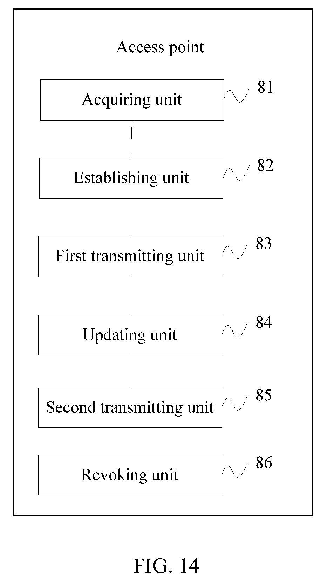

Optionally, as shown in FIG. 14, the access point further includes:
an updating unit 84, configured to update the dedicated channel according to data packet transmission state information between the AP and the terminal station, and notify the terminal station of performing communication via the updated dedicated channel; and
a second transmitting unit 85, transmit a data packet to the terminal station via the updated dedicated channel.

Optionally, as shown in FIG. 14, the access point further includes: a revoking unit 86, configured to, when data packet transmission between the AP and the terminal station is terminated, revoke the dedicated channel between the AP and the terminal station.

The access point according to the embodiment of the present invention may be used for implementing the aforementioned method embodiments. Besides, the component units of the access point and functions of each unit according to the embodiment of the present invention are merely briefly introduced here, and please refer to corresponding parts in the aforementioned method embodiments for detail descriptions.

For the access point according to the aforementioned embodiment, the AP acquires the service attribute information between the AP and the terminal station, the AP establishes the dedicated channel dedicated to transmitting a data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

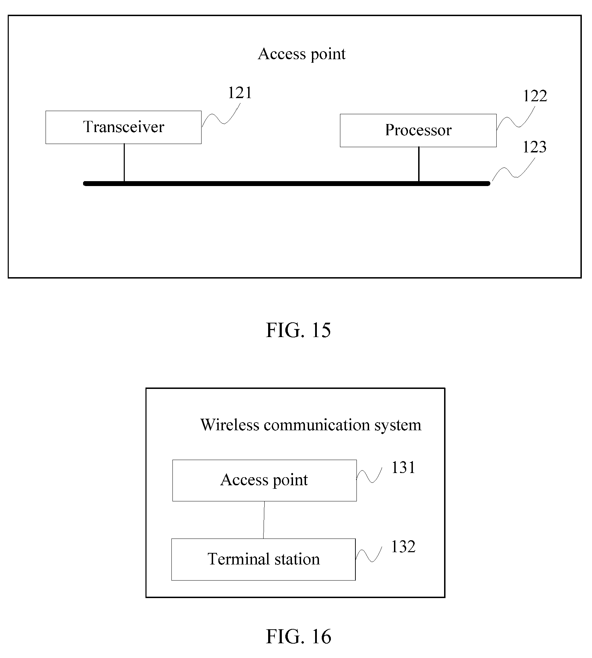

As shown FIG. 15, an access point according to an embodiment of the present invention includes: a transceiver 121 and a processor 122 which are connected via a bus 123, where:
the transceiver 121, configured to acquire service attribute information between the AP and a terminal station;
the processor 122, configured to establish a dedicated channel between the AP and the terminal station according to the service attribute information, where the dedicated channel is dedicated to transmitting a data packet between the AP and the terminal station;
the transceiver 121 is also configured to transmit a data packet to the terminal station via the dedicated channel.

Optionally, the service attribute information includes service period information and a data packet length, the processor 122 is specifically configured to: determine a period of a target physical resource unit according to the service period information, where the target physical resource unit is a physical resource unit corresponding to the dedicated channel; determine a length of the target physical resource unit according to the length of the data packet; acquire location information of the target physical resource unit; send to the terminal station the location information of the target physical resource unit, the period of the target physical resource unit and the length of the target physical resource unit, trigger the terminal station to determine the target physical resource unit and establish the dedicated channel between the AP and the terminal station.

Optionally, the service attribute information includes service period information, the processor 122 is specifically configured to: determine a period of a target physical resource unit according to the service period information, where the target physical resource unit is a physical resource unit corresponding to the dedicated channel; determine a length of the target physical resource unit according to a preset length of the data packet; acquire location information of the target physical resource unit; send to the terminal station the location information of the target physical resource unit, the period of the target physical resource unit and the length of the target physical resource unit, trigger the terminal station to determine the target physical resource unit and establish the dedicated channel between the AP and the terminal station.

Optionally, the processor 122 is specifically configured to establish the dedicated channel between the AP and the terminal station, after acquiring the service attribute information; or establish the dedicated channel between the AP and the terminal station, after acquiring the service attribute information and receiving a request for establishing the dedicated channel sent by the terminal station; or establish the dedicated channel between the AP and the terminal station, after acquiring the service attribute information and a number of data packets transmitted within a preset time between the AP and the terminal station exceeds a preset threshold.

Optionally, the processor 122 is specifically configured to: determine the service attribute information according to data packet transmission state information between the AP and the terminal station; or receive the service attribute information sent by the terminal station, where the service attribute information is determined by the terminal station according to the data packet transmission state information between the AP and the terminal station.

Optionally, the processor 122 is further configured to: update the dedicated channel according to data packet transmission state information between the AP and the terminal station, and notify the terminal station of performing communication via the updated dedicated channel; and transmit a data packet to the terminal station via the updated dedicated channel.

Optionally, the processor 122 is further configured to: when data packet transmission between the AP and the terminal station is terminated, revoke the dedicated channel between the AP and the terminal station.

The access point according to the embodiment of the present invention may be used for implementing the aforementioned method embodiments. Besides, the functions of the access point according to the embodiment of the present invention are merely briefly introduced here, and please refer to corresponding parts in the aforementioned method embodiments for detail descriptions.

For the access point according to the aforementioned embodiment, the AP acquires the service attribute information between the AP and the terminal station, the AP establishes the dedicated channel dedicated to transmitting a data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

As shown in FIG. 16, a wireless communication system according to an embodiment of the present invention includes an access point 131 and at least one terminal station 132, where:
the access point 131 is configured to acquire service attribute information between the AP and the terminal station; establish a dedicated channel between the AP and the terminal station according to the service attribute information, where the dedicated channel is dedicated to transmitting a data packet between the AP and the terminal station; and transmit a data packet to the terminal station via the dedicated channel;
the terminal station 132 is configured to transmit a data packet to the terminal station via the dedicated channel;
the access point 131 may be the access point according to any one of embodiments of the present invention.

The component units of the terminal station and functions of each unit according to the embodiment of the present invention are as same as those of the access point according to the embodiment of the present invention, please refer thereto.

In the wireless communication system according to the aforementioned embodiment, the AP acquires the service attribute information between the AP and the terminal station, the AP establishes the dedicated channel dedicated to transmitting a data packet between the AP and the terminal station according to the service attribute information, and the AP transmits the data packet to the terminal station via the dedicated channel. In this way, the data packet is transmitted between the AP and the terminal station directly via the dedicated channel. Compared with the prior art where a channel is reallocated each time a data packet is transmitted, the embodiments of the present invention can save time for channel allocation, thereby reducing the time delay of transmitting the data packet.

The embodiments of the present invention are mainly used for transmitting small data packets, and can also be used for implementing services which are sensitive to time delay and whose data packets' sizes are relatively fix, which can reduce the time delay of transmitting the data packet.

The embodiments in the specification are described in a progressive manner. The same or similar parts of the respective embodiments may be referred to each other. The description of each embodiment focuses on the difference compared with other embodiments. Especially, for the apparatus embodiments, since they are similar to the method embodiments, their descriptions are relatively simple, and relevant parts may be referred to the description of the method embodiments. The above described apparatus embodiments are merely exemplary, where the units described as separate parts may or may not be physically separate, and parts displayed as units may or may not be physical units, that is, they may be located in one position, or may be distributed on multiple network units. A part or all of the modules may be selected according to an actual need to achieve the objectives of the solutions of the embodiments, which can be understood and implemented by persons of ordinary skill in the art without any creative work.

It may be appreciated by persons of ordinary skill in the art that, the units and the algorithm steps of each example that are described with reference to the embodiments disclosed herein may be implemented by electronic hardware, or a combination of electronic hardware and computer software. The situation that these functions are performed by hardware or software depends on specific application and a design constraint of the technical solutions. Persons skilled in the art may implement the described functions by using different methods for each specific application, and such implementation should not be regarded as going beyond the scope of the present invention.

A person skilled in the art can clearly understand that, for the purpose of convenient and brief description, for a detailed working process of the foregoing system, apparatus and unit, reference may be made to the corresponding process in the forgoing method embodiments, and the details will not be described herein again.

In the several embodiments provided in the present application, it should be understood that the disclosed system, apparatus and method may be implemented in other manners. For example, the described apparatus embodiment is merely exemplary. For example, the unit partition is merely logical function partition and may be other partition in actual implementation. For example, a plurality of units or components may be combined or integrated into another system, or some features may be ignored or not performed. In addition, the displayed or discussed mutual couplings or direct couplings or communication connections may be implemented through some interface. The indirect couplings or communication connections between the apparatuses or units may be implemented in electronic, mechanical, or other forms.

The units described as separate parts may or may not be physically separate, and parts displayed as units may or may not be physical units, that is, they may be located in one position, or may be distributed on multiple network units. Part or all of the units may be selected according to the actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the integrated unit may be stored in a computer-readable storage medium. Based on such an understanding, the technical solutions of the present invention essentially, or the part contributing to the prior art, or a part of the technical solutions may be implemented in the form of a software product. The computer software product is stored in a storage medium and includes several instructions for instructing a computer device (which may be a personal computer, a server, or a network device) to perform all or a part of steps of the methods described in the embodiments of the present invention. The storage medium includes: any medium that can store program codes, such as a USB flash disk, a removable hard disk, a read-only memory (ROM, Read-Only Memory), a random access memory (RAM, Random Access Memory), a magnetic disk, or an optical disk.

Through the descriptions of the foregoing implementation manners, a person skilled in the art may clearly understand that the present invention may be implemented using software plus necessary universal hardware, where the universal hardware includes a universal integrated circuit, a universal CPU, a universal memory, a universal component or etc., and certainly may be implemented using dedicated hardware such as a dedicated integrated circuit, a dedicated CPU, a dedicated memory, a dedicated component or etc. However, in most cases, the former is a preferred implementation manner. Based on such an understanding, the technical solutions of the present invention essentially, or the part contributing to the prior art may be implemented in the form of a software product. The computer software product is stored in a readable storage medium, for example, a floppy disk, a hard disk, or an optical disc of a computer, and includes several instructions for instructing a computer device (which may be a personal computer, a server, a network device, and the like) to execute the methods described in the embodiments of the present invention.

The above descriptions are only preferable embodiments of the present invention, but are not intended to limit the present invention. Any modification, equivalent replacement, or improvement made without departing from the spirit and principle of the present invention should fall within the protection scope of the present invention.

## Claims

1. A method for data packet transmission, **characterized by** comprising:
acquiring, by an AP, service attribute information between the AP and a terminal station;
establishing, by the AP, a dedicated channel between the AP and the terminal station according to the service attribute information, wherein the dedicated channel is dedicated to transmitting a data packet between the AP and the terminal station; and
transmitting, by the AP, a data packet to the terminal station via the dedicated channel.

2. The method according to claim 1, wherein the service attribute information comprises service period information and a length of the data packet, and the establishing, by the AP, the dedicated channel between the AP and the terminal station according to the service attribute information comprises:
determining, by the AP, a period of a target physical resource unit according to the service period information, wherein the target physical resource unit is a physical resource unit corresponding to the dedicated channel;
determining, by the AP, a length of the target physical resource unit according to the length of the data packet;
acquiring, by the AP, location information of the target physical resource unit;
sending, by the AP, to the terminal station the location information of the target physical resource unit, the period of the target physical resource unit and the length of the target physical resource unit, and establishing the dedicated channel between the AP and the terminal station.

3. The method according to claim 1, wherein the service attribute information comprises service period information, wherein the establishing, by the AP, the dedicated channel between the AP and the terminal station according to the service attribute information comprises:
determining, by the AP, a period of a target physical resource unit according to the service period information, wherein the target physical resource unit is a physical resource unit corresponding to the dedicated channel;
determining, by the AP, a length of the target physical resource unit according to a preset length of the data packet;
acquiring, by the AP, location information of the target physical resource unit;
sending, by the AP, to the terminal station the location information of the target physical resource unit, the period of the target physical resource unit and the length of the target physical resource unit, and establishing the dedicated channel between the AP and the terminal station.

4. The method according to any one of claims 1 to 3, wherein the establishing, by the AP, the dedicated channel between the AP and the terminal station according to the service attribute information comprises:
establishing the dedicated channel between the AP and the terminal station, after the AP acquires the service attribute information;
or, establishing the dedicated channel between the AP and the terminal station, after the AP acquires the service attribute information and receives a request for establishing the dedicated channel sent by the terminal station;
or, establishing the dedicated channel between the AP and the terminal station, after the AP acquires the service attribute information and a number of data packets transmitted within a preset time between the AP and the terminal station exceeds a preset threshold.

5. The method according to any one of claims 1 to 4, wherein the acquiring, by the AP, the service attribute information between the AP and the terminal station comprises:
determining, by the AP, the service attribute information according to data packet transmission state information between the AP and the terminal station;
or, receiving, by the AP, the service attribute information sent by the terminal station, wherein the service attribute information is determined by the terminal station according to data packet transmission state information between the AP and the terminal station.

6. The method according to any one of claims 1 to 5, wherein after the establishing, by the AP, the dedicated channel between the AP and the terminal station according to the service attribute information, further comprising:
revoking, by the AP, the dedicated channel between the AP and the terminal station, when the data packet transmission between the AP and the terminal station is terminated.

7. The method according to any one of claims 1 to 6, wherein after the transmitting, by the AP, the data packet to the terminal station via the dedicated channel, further comprising:
updating, by the AP, the dedicated channel according to data packet transmission state information between the AP and the terminal station, and notifying the terminal station of performing the communication via the updated dedicated channel; and
transmitting, by the AP, a data packet to the terminal station via the updated dedicated channel.

8. The method according to claim 2 or 3, wherein the service period information comprises at least one of the followings:
a transmission period of the data packet, a maximal time delay value of the data packet and an average arriving rate of the data packet.

9. The method according to claim 2 or 3, wherein the physical resource unit is a part of a physical resource block, or the physical resource unit comprises at least one physical resource block.

10. An access point, **characterized by** comprising:
an acquiring unit, configured to acquire service attribute information between the AP and a terminal station;
an establishing unit, configured to establish a dedicated channel between the AP and the terminal station according to the service attribute information, wherein the dedicated channel is dedicated to transmitting a data packet between the AP and the terminal station; and
a first transmitting unit, configured to transmit a data packet to the terminal station via the dedicated channel.

11. The access point according to claim 10, wherein the establishing unit comprises:
a first sub-unit, configured to determine a period of a target physical resource unit according to the service period information, wherein the target physical resource unit is a physical resource unit corresponding to the dedicated channel;
a second sub-unit, configured to determine a length of the target physical resource unit according to the length of the data packet;
a third sub-unit, configured to acquire location information of the target physical resource unit; and
a fourth sub-unit, configured to send to the terminal station the location information of the target physical resource unit, the period of the target physical resource unit and the length of the target physical resource unit, and establish the dedicated channel between the AP and the terminal station.

12. The access point according to claim 10, wherein the establishing unit comprises:
a fifth sub-unit, configured to determine a period of a target physical resource unit according to the service period information, wherein the target physical resource unit is a physical resource unit corresponding to the dedicated channel;
a sixth sub-unit, configured to determine a length of the target physical resource unit according to a preset length of the data packet;
a seventh sub-unit, configured to acquire location information of the target physical resource unit; and
an eighth sub-unit, configured to send to the terminal station the location information of the target physical resource unit, the period of the target physical resource unit and the length of the target physical resource unit, and establish the dedicated channel between the AP and the terminal station.

13. The access point according to any one of claims 10 to 12, further comprising:
a revoking unit, configured to revoke the dedicated channel between the AP and the terminal station, when data packet transmission between the AP and the terminal station is terminated.

14. The access point according to any one of claims 10 to 13, wherein the establishing unit is specifically configured to establish the dedicated channel between the AP and the terminal station, after acquiring the service attribute information;
or, the establishing unit is specifically configured to establish the dedicated channel between the AP and the terminal station, after acquiring the service attribute information and receiving a request for establishing the dedicated channel sent by the terminal station;
or, the establishing unit is specifically configured to establish the dedicated channel between the AP and the terminal station, after acquiring the service attribute information and a number of data packets transmitted within a preset time between the AP and the terminal station exceeds a preset threshold.

15. The access point according to any one of claims 10 to 14, wherein the acquiring unit comprises any one of the following sub-units:
a first sub-unit, configured to determine the service attribute information according to data packet transmission state information between the AP and the terminal station; and
a second sub-unit, configured to receive the service attribute information sent by the terminal station, wherein the service attribute information is determined by the terminal station according to the data packet transmission state information between the AP and the terminal station.

16. The access point according to any one of claims 10 to 15, further comprising:
an updating unit, configured to update the dedicated channel according to data packet transmission state information between the AP and the terminal station, and notify the terminal station of performing communication via the updated dedicated channel; and
a second transmitting unit, transmit a data packet to the terminal station via the updated dedicated channel.

17. A wireless communication system, **characterized by** comprising an access point and at least one terminal station, wherein:
the access point is configured to acquire service attribute information between the AP and the terminal station; establish a dedicated channel between the AP and the terminal station according to the service attribute information, where the dedicated channel is dedicated to transmitting a data packet between the AP and the terminal station; transmit a data packet to the terminal station via the dedicated channel;
the terminal station is configured to transmit a data packet to the terminal station via the dedicated channel;
the access point comprises the access point according to any one of claims 10 to 16.
